Europäisches Patentamt

European Patent Office

Office européen des brevets

(11) Numéro de publication : **0 347 312 B1**

## (12) FASCICULE DE BREVET EUROPEEN

(45) Date de publication du fascicule du brevet :
02.12.92 Bulletin 92/49

(51) Int. Cl.⁵ : **G21C 19/36**

(21) Numéro de dépôt : **89401660.9**

(22) Date de dépôt : **14.06.89**

(54) **Dispositif pour cisailler un assemblage de tubes.**

(30) Priorité : **15.06.88 FR 8808029**

(43) Date de publication de la demande :
**20.12.89 Bulletin 89/51**

(45) Mention de la délivrance du brevet :
**02.12.92 Bulletin 92/49**

(84) Etats contractants désignés :
**BE CH DE ES GB IT LI NL SE**

(56) Documents cités :
**EP-A- 0 061 396**
**EP-A- 0 094 883**
**FR-A- 2 324 094**

(73) Titulaire : **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex (FR)**

(72) Inventeur : **Anciaux, Ghislain**
**Les Mon Doux**
**F-87150 Champagnac la Rivière (FR)**
Inventeur : **Guilloteau, René**
**9 rue du Dr Roux**
**F-91370 Verrières le Buisson (FR)**
Inventeur : **Tucoulat, Daniel**
**67 rue du Professeur Calmette**
**F-95240 Cormeilles en Parisis (FR)**
Inventeur : **Chauvire, Pascal**
**51 Quai de Grenelle**
**F-75015 Paris (FR)**

(74) Mandataire : **Portal, Gérard et al**
**Cabinet Beau de Loménie 55, rue d'Amsterdam**
**F-75008 Paris (FR)**

## Description

Les éléments combustibles nucléaires après extraction du réacteur sont stockés quelque temps en piscine pour une première décroissance de la radioactivité. On se trouve alors devant le choix : stockage ou retraitement.

Pour faciliter le stockage, il est bon de réduire l'encombrement des assemblages combustibles en séparant, d'un côté, les aiguilles ou crayons contenant le combustible et, d'un autre côté, toute la structure mécanique (embouts de pied, de tête, tubes-guides, grilles de maintien, etc.).

Cette structure a été rendue radioactive par son passage dans le réacteur (activité neutronique d'où présence de Cobalt 60 engendrée par le nickel naturel), mais est peu ou pas contaminée. Pour limiter la place occupée par cette structure, on a intérêt à la découper en morceaux que l'on range dans des fûts (canisters).

Dans la filière du retraitement, on commence par cisailler les éléments combustibles pour permettre la dissolution du combustible présent dans les crayons.

On voit donc qu'il faut passer dans la plupart des cas par une opération de cisaillage.

Les dispositifs permettant ces opérations comportent une cisaille proprement dite et un magasin alimentant la cisaille.

On rappelle que les éléments combustibles pour les réacteurs du type REB ou REP, c'est-à-dire les plus répandus, sont constitués d'un faisceau de crayons (diamètre de l'ordre du centimètre, longueur : plusieurs mètres, nombre : plusieurs centaines) parallèles compris entre deux embouts assez massifs.

Entre les embouts, des grilles en tôle mince maintiennent l'écartement des crayons.

Il est en outre fréquent qu'une jupe en tôle, soudée à l'embout de pied, entoure le bas du faisceau combustible.

On a déjà décrit des cisailles pour les éléments combustibles.

Le brevet GB-A-1 314 803 décrit une cisaille dite horizontale où les éléments combustibles sont placés en position horizontale pour être découpés.

Le brevet français FR-A-2324094 décrit une cisaille où les éléments combustibles peuvent être découpés.

On constate que tous ces dispositifs sont constitués d'un châssis dans lequel un chariot se déplace d'un mouvement de translation rectiligne alternatif; le chariot porte une lame coupant par sa face avant et le châssis comporte une contre-lame fixe. La lame et la contre-lame définissant le plan de coupe.

Le mode de coupe est toujours le même : le chariot est reculé, l'élément combustible est avancé en position verticale vers le bas entre la lame et la contre-lame de manière à dépasser, d'une quantité voulue, le plan de coupe. On avance le chariot et la lame coupant des crayons grâce à la contre-lame qui les empêche de reculer. On recule le chariot, etc.

Pour faciliter la coupe, le faisceau est comprimé par un ou plusieurs serre-flancs latéraux empêchant les crayons d'échapper à la coupe.

La demanderesse a constaté que la première coupe, séparant donc l'embout de pied de tout l'assemblage, était très difficile. En particulier, la présence d'une jupe introduit une anomalie dans la coupe : toute la partie arrière de la jupe n'est pas coupée mais est rabattue dans le plan supérieur de l'embout.

Cela est dû à ce que la lame destinée à couper perpendiculairement à leur longueur les crayons combustibles n'est pas capable de couper la jupe.

La présente invention a pour caractéristique de ne pas couper l'embout et la jupe avec la lame de coupe.

Une caractéristique importante de la présente invention est la présence de deux alvéoles de coupe sur le chariot, une alvéole pour la coupe de l'embout (on l'appellera alvéole avant) et une alvéole pour la coupe des crayons et des tubes-guides (on l'appellera alvéole arrière).

Une autre caractéristique de l'invention est la position verticale du faisceau, dans un magasin fixe, à axe vertical; les deux fonctions de coupe (embout - faisceau) étant effectuées par des courses différentes du chariot.

Le plan de coupe dans la présente invention est horizontal et est défini par une lame et deux contre-lames.

### Liste des figures

Figure 1 : vue générale en perspective

Figure 2 : vue du chariot en perspective

Figure 3 : coupe transversale du chariot selon un premier mode de réalisation

Figure 4 : coupe transversale du chariot selon un premier mode de réalisation

Figure 5 : coupe longitudinale schématique du chariot

Figure 6 : coupe horizontale de la partie basse du magasin

Figure 7 : vue en perspective du haut du magasin

### Description

On se référera aux directions suivantes :

- L'élément à couper est vertical, au-dessus de la cisaille.

La flèche B est verticale.

- Le déplacement du chariot est rectiligne et horizontal. On appelle sens avant le sens où la lame fixée sur le chariot coupe les crayons de l'assemblage. La flèche A donne la direction avant. On expliquera plus loin qu'une opération de coupe partielle de jupe se fait en reculant.

- La flèche C indique la direction gauche.
- Le plan de coupe est horizontal et est défini par la face supérieure de la lame et les faces inférieures des deux contre-lames.
- Le plan des flèches A-C est horizontal.

## Organisation générale de la cisaille

La cisaille est composée dans son ensemble d'un châssis 1 ayant une section en U ouvert à la partie supérieure.

Sur le châssis, est fixé un magasin vertical 2 où l'on place l'élément à couper 3. L'embout de pied est à la partie basse, l'embout de tête (quand il n'a pas été séparé préalablement) est à la partie haute.

Dans le châssis, se déplace un tiroir guidé que l'on appelle chariot porte-lame 17 désigné ci-dessous par chariot; le chariot est guidé pour avoir un déplacement rectiligne et alternatif avec des frottements réduits.

Le magasin comporte un serre-flanc 8 et deux faces mobiles.

## Description du châssis

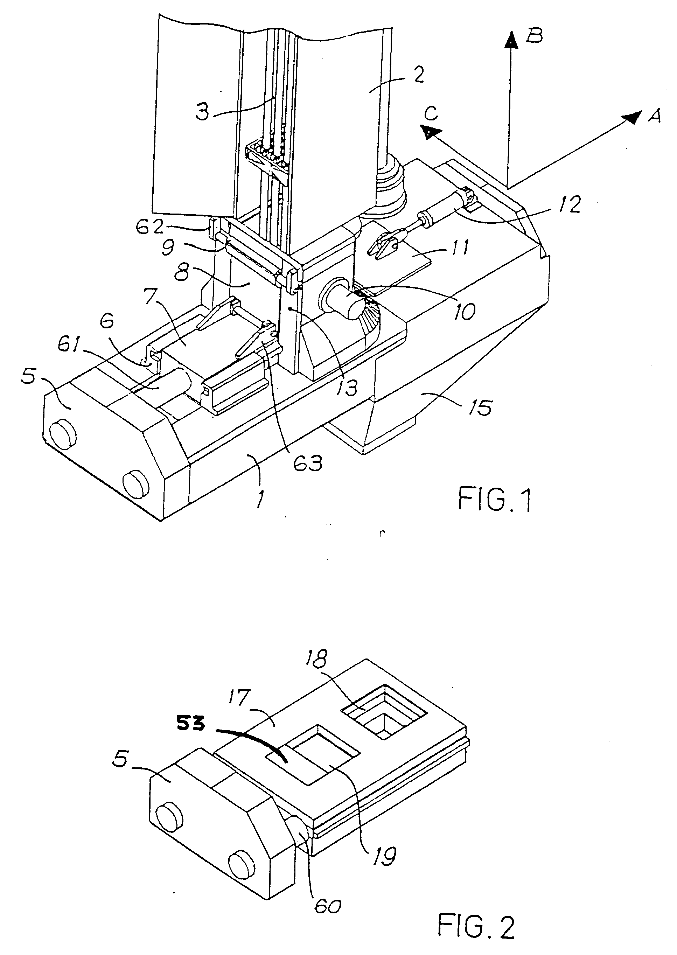

La figure 1 permet de suivre la description du châssis. Il est composé de l'assemblage de poutres longitudinales et d'entretoises ou cloisons telles que 5. La face supérieure est ouverte. Un couvercle amovible 11 peut obturer partiellement cette face supérieure. Un vérin 12 permet la manoeuvre du couvercle 11.

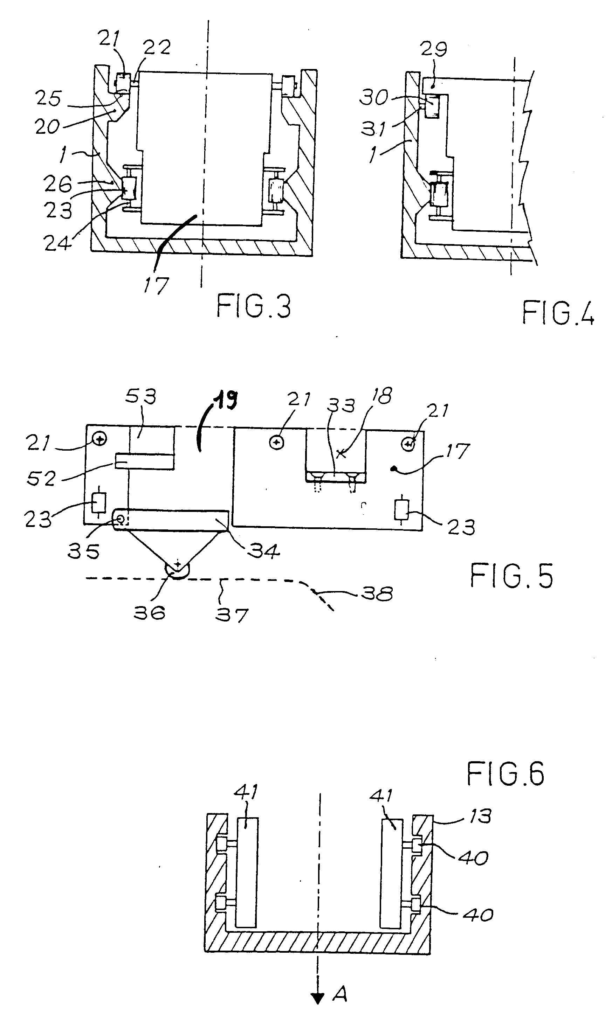

Le châssis comporte deux systèmes de guidage pour le chariot, schématisés sur la figure 3.

Les rails 20 assurent l'horizontalité de la course du chariot et les rails 26 assurent le parallélisme de la course avec l'axe du châssis.

On présentera en fin de description une variante pour ce guidage.

La cloison 5 solidement nervurée forme la face arrière du châssis.

Il est nécessaire de veiller à sa résistance mécanique car cette cloison encaisse les efforts de coupe (plusieurs dizaines de tonnes).

Le châssis se termine à sa partie inférieure par un entonnoir 15.

Sur chacune des deux faces latérales, à l'intérieur, le châssis présente une rampe 37 horizontale sur sa partie arrière et descendante sur sa partie avant 38.

Cette rampe coopère avec une palette 34 comme précisé plus loin.

## Description du chariot

La figure 2 montre le chariot en perspective.

On voit qu'il a la forme générale d'un tiroir coulissant dans le châssis. La face supérieure comporte deux alvéoles :

- l'alvéole avant 18 fermée à sa partie inférieure, de forme carrée,
- l'alvéole arrière 19 ouverte à sa partie inférieure, mais pouvant être temporairement obturée par la palette 34.

On notera que dans le déplacement du chariot la face supérieure est confondue avec le plan de coupe.

La figure 5 montre une coupe longitudinale du chariot, qui permet de préciser la fonction des détails internes des alvéoles.

L'embout de pied doit tenir exactement en hauteur dans l'alvéole avant 18.

En fait, la profondeur de l'alvéole avant est supérieure à cette côte et, pour chaque type de combustible, on dispose une cale 33 fixée par les vis au fond de l'alvéole.

Dans l'alvéole arrière 19, ouverte, sur la face arrière, on fixe un support 52 de lame 53; celui-ci est encastré dans la face arrière et tenu par un système de vis (non représentées).

La lame 53 est fixée sur son support de manière que la face supérieure de la lame soit exactement dans le plan de coupe.

La partie inférieure de l'alvéole arrière est ouverte, mais la palette 34 mobile en rotation autour de l'axe 35 peut obturer cette partie inférieure; son rôle sera explicité en même temps que l'ensemble du fonctionnement de la cisaille.

La palette comporte, à droite et à gauche, deux bras portant un galet.

Ce galet roule sur la rampe 37 du châssis.

Le rôle de la palette et de la rampe sera expliqué dans l'ensemble du fonctionnement.

Le chariot comporte sur les deux faces latérales deux ensembles de galets (symétriques par rapport au plan longitudinal). Voir figures 3 et 4.

Les galets hauts 21, à axe horizontal 22, au nombre de trois ensembles (de préférence) roulent sur la partie supérieure 25 du rail 20 du châssis.

Les galets bas 23, à axe vertical 24, au nombre d'au moins deux ensembles roulent sur la partie verticale du rail 26 du châssis.

On notera qu'il est tout à fait possible d'échanger les positions des rails et des galets sans changer le résultat obtenu, c'est-à-dire le guidage du chariot. La figure 4 montre les rails hauts 29 fixés au chariot et les galets hauts 30 fixés au châssis par l'axe 31.

De même, on peut remplacer les galets par des patins avec le même résultat.

Le déplacement du chariot dans le châssis en avant et en arrière est assuré d'une manière simple par un ou deux vérins 60 à double effet à axe horizontal.

On préfère deux vérins placés symétriquement par rapport au plan de symétrie longitudinale pour mieux équilibrer les efforts.

Si l'on veut diminuer la longueur totale du châssis et donc de la cisaille, une solution consiste à aléser le corps desdits cylindres dans le chariot, avec la tige de chaque vérin à l'arrière du chariot, appuyée sur la cloison arrière 5 du châssis, par l'intermédiaire d'une rotule (non représentée).

Description du magasin

A cheval sur la face supérieure du châssis, un magasin de forme prismatique à axe vertical est fixé par des vis au châssis. La figure 1 montre ledit magasin 2.

Le magasin comprend une partie basse 13 et une partie haute 43, dont les fonctions sont différentes.

Le magasin sert à maintenir le faisceau de combustibles en position verticale et à le comprimer latéralement pendant la coupe pour éviter aux crayons de se tordre. Un dispositif faisant partie du magasin fait descendre le combustible entre chaque coupe.

La partie basse du magasin est composée d'un prisme rectangulaire 13 dans lequel le faisceau de combustibles coulisse avec peu de jeu. On comprend donc que le magasin est spécifique d'un type de combustibles.

La face arrière 8 de la partie basse du magasin est mobile et sert de serre-flanc. La figure 1 montre comment cette face 8 peut être poussée par un vérin pour diminuer la section en bas du magasin. On voit sur la figure que cette partie mobile a un déplacement différent pour son arête haute et pour son arête basse.

La partie mobile 8 ou face arrière du magasin est articulée en haut autour d'un axe 9 qui peut se déplacer dans une glissière verticale 62.

En bas de la partie 8, sont articulées deux équerres 63 fixées sur une coulisse 7 glissant dans les rainures des guides 6 (fixés au châssis). Le vérin 61 fait avancer ou reculer la coulisse 7.

L'arête haute de la partie mobile 8 reste dans le plan vertical de la face arrière du magasin grâce à deux glissières, alors que l'arête basse reste parallèle au plan de coupe et à distance constante.

La face avant de la partie basse du magasin porte une contre-lame dont la partie inférieure plane et horizontale est dans le plan de coupe.

Les faces latérales droite et gauche de la partie basse du magasin sont représentées sur la figure 6. En examinant par exemple la face droite, on voit qu'elle est constituée d'une paroi 41 sur laquelle frotte le faisceau de combustibles. Cette paroi 41 est mobile parallèlement à elle-même grâce à une pluralité de vérins à faible course 40 appuyés sur une paroi verticale fixe 13.

Le rôle de cette paroi mobile (à droite et à gauche) sera exposé dans l'ensemble du fonctionnement.

La partie haute du magasin a une forme prismatique prolongeant la section de la partie basse.

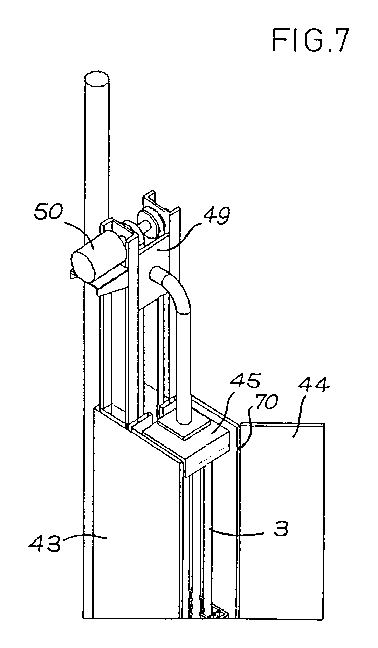

La figure 7 représente cette partie haute.

On y voit que la face arrière 44 a la forme d'une porte ouvrant grâce à la charnière 70. Cela facilite l'introduction du faisceau de combustibles.

On peut proposer, pour un faisceau de combustibles d'à peu près 5 mètres de long, de répartir la hauteur entre 0,5 mètre pour la partie basse du magasin et 4,5 mètres pour la partie haute.

A la partie supérieure de la partie haute du magasin, un poussoir ayant la forme d'une plaque horizontale 45 coulissant dans le magasin, mise en mouvement par une plaque verticale 49 (actionnée par le moteur 50), peut appliquer une poussée descendante au faisceau de combustibles, quand ledit moteur 50 est alimenté en énergie.

Une solution intéressante est d'utiliser un moteur pneumatique alimenté, au moment voulu, en air comprimé. On peut également utiliser un moteur électrique équipé d'un réducteur de vitesse.

Exemples de fonctionnement

Exemple 1 : coupe d'un embout de pied

Le chariot 17 est placé de manière que l'alvéole avant 18 pour l'embout de pied soit sous le magasin 2.

Il est simple de placer un détecteur de position sur le châssis 1 pour s'assurer du bon positionnement du chariot.

On introduit dans le magasin par la porte 44 un faisceau de combustibles, l'embout de pied descendant dans l'alvéole avant 18 du chariot. La cale 33 placée au fond de l'alvéole 18 a été choisie de manière que la partie horizontale supérieure de l'embout de pied sort juste au niveau du plan de coupe.

On actionne le vérin du serre-flanc 8 pour maintenir le faisceau, puis on recule le chariot 17 de vingt ou trente millimètres. De cette façon, la base du serre-flanc attaque la jupe et sépare la face arrière de la jupe de l'embout de pied (en arrachant les points de soudure).

On fait alors avancer le chariot 17 jusqu'à ce que l'alvéole avant 18 entraîne l'embout de pied sous la contre-lame, ce qui sépare complètement l'embout des crayons du faisceau. En outre, grâce à la manoeuvre précédente, la jupe est complètement séparée de l'embout de pied.

Il reste à évacuer l'embout : un grappin le saisit et le lève, on recule le chariot et on descend l'embout par l'entonnoir 15 dans un fût (canister).

Exemple 2 : coupe d'un faisceau

Cette coupe intervient après la coupe de l'embout de pied. On place le chariot 17 de manière que l'alvéole arrière 19 soit sous le magasin 2.

La palette 34, grâce à la rampe 37 du châssis, est en position haute.

On desserre le serre-flanc 8 et on écarte les deux parois latérales 41 de la partie basse 13 du magasin par les vérins 40 à faible course (un centimètre suffit).

Le faisceau descend de lui-même jusqu'à toucher la palette 34. On actionne en même temps le poussoir 45 qui, éventuellement, servira à aider la descente.

La palette 34 a un rôle double : empêcher le faisceau de descendre trop bas et régler la longueur de coupe. Il s'ensuit que la palette doit être changée si on veut changer la longueur de coupe.

On actionne les vérins 40 des parties latérales basses du magasin 2 puis on actionne le vérin 61 du serre-flanc 8 pour comprimer tous les crayons.

Pour l'action des deux vérins 60, on fait avancer le chariot : la lame 53 du chariot en coopération avec la contre-lame (de la face avant du magasin) sectionne à la longueur choisie tous les crayons.

On notera que tous les morceaux restent dans l'alvéole arrière 19, sur la palette 34, quand le chariot avance, jusqu'à ce que les rampes 38 du châssis 1 laissent la palette s'incliner pour vider les morceaux coupés dans l'entonnoir 15.

On recule le chariot et recommence toutes les opérations précédentes jusqu'à ce qu'il ne reste plus de combustible.

**Revendications**

1. Dispositif de cisaillage de la structure mécanique des assemblages combustibles de réacteur nucléaire, ladite structure comportant au moins un embout de pied et des tubes-guides (3) ; ladite structure étant placée verticalement dans un magasin (2), le cisaillage étant effectué par le déplaçant d'une lame (53) montée sur un chariot porte-lame (17) se déplaçant d'un mouvement de translation rectiligne alternatif dans un châssis (1), caractérisé en ce que ledit chariot porte-lame (17) comporte à sa partie supérieure deux alvéoles (18-19) sensiblement rectangulaires : une alvéole avant (18), fermée en partie inférieure, destinée à recevoir et à couper ledit embout de pied et une alvéole arrière (19), ouverte à sa partie inférieure et destinée à recevoir et à couper lesdits tubes (3), ladite alvéole arrière (19) pouvant être momentanément obturée par une palette mobile (34).

2. Dispositif selon la revendication 1, caractérisé en ce que le plan de coupe est horizontal et est défini par la partie supérieure de la lame (53) placée dans l'alvéole arrière (19) et par la partie inférieure de deux contre-lames, la contre-lame avant étant fixée au châssis (1) et la contre-lame arrière étant fixée au magasin (2).

3. Dispositif selon l'une des revendications 1 ou 2, caractérisé en ce que le chariot porte-lame (17) est déplacé par deux vérins (60) à axe horizontal placés symétriquement entre une cloison (5) du châssis (1) et le chariot porte-lame (17).

4. Dispositif selon la revendication 3, caractérisé en ce que le corps de chacun des vérins (60) est usiné dans le chariot porte-lame (17) et que la tige de chacun desdits vérins (60) est fixée par une rotule à une cloison (5) du châssis (1).

5. Dispositif selon l'une quelconque des revendications 1 à 4, caractérisé en ce que le magasin (2) comporte une partie basse (13) à section variable et une partie haute (43) ouvrante à section rectangulaire constante.

6. Dispositif selon la revendication 5, caractérisé en ce que la face arrière (8) de la partie basse (13) peut prendre une position oblique comprimant les tubes placés dans le magasin par l'action d'un vérin (61) poussant ladite face arrière par l'intermédiaire d'une rotule.

7. Dispositif selon l'une des revendications 5 ou 6, caractérisé en ce que les faces latérales (41) de la partie basse (13) du magasin (2) peuvent se déplacer tout en restant verticales par l'action d'une pluralité de vérins (40) à faible course.

8. Dispositif selon l'une quelconque des revendications précédentes, caractérisé en ce que la palette mobile (34) pouvant obturer l'alvéole arrière (19) de coupe des tubes est articulée autour d'un axe horizontal (35) perpendiculaire à la course du chariot (17), que ladite palette (34) est soutenue de chaque côté par un bras articulé sous la palette et terminée par un galet (36) roulant ou glissant sur une rampe (37) fixée au châssis (1).

9. Dispositif selon la revendication 8, caractérisé en ce que la rampe est horizontale dans sa partie arrière (37) et descendante dans sa partie avant (38), le changement de direction étant placé de manière que, dans la course vers l'avant du chariot (17), la palette (34) obture l'alvéole de coupe (19) jusqu'à la fin de la coupe, puis bascule de manière à laisser tomber vers un entonnoir (15) inférieur les morceaux de tubes coupés.

10. Dispositif selon l'une quelconque des revendications 1 à 9, caractérisé en ce que le chariot porte-lame (17) porte une pluralité de galets (21) à axe horizontal (22) roulant sur des rails (20) horizontaux et fixés au châssis (1).

**11.** Dispositif selon l'une quelconque des revendications 1 à 9, caractérisé en ce que le châssis (1) comporte sur ses deux faces latérales une pluralité de galets (30) à axe horizontal et alignés horizontalement et que le chariot (17) comporte sur chacune de ses faces latérales un rail (29) horizontal et que lesdits rails (29) reposent sur lesdits galets (30).

**Claims**

**1.** Device for shearing the mechanical structure of the nuclear reactor fuel structure, said former structure constituted of at least one base end piece and of guide tubes (3); said structure being placed vertically in a magazine (2), the shearing being carried out by the displacement of a blade (53) mounted on a blade-bearing saddle (17) that displaces in an alternating rectilinear translation movement within a chassis (1), characterized in that said blade-bearing saddle (17) has, at its upper portion, two openings (18-19) that are substantially rectangular : a front opening (18), closed at its lower portion, intended for receiving and for cutting said base end piece and a rear opening (19), open at its lower portion and intended for receiving and for cutting said tubes (3), said rear opening (19) capable of being temporarily closable by a movable flap (34).

**2.** Device according to claim 1, characterized in that the cutting plane is horizontal and is defined by the upper portion of the blade (53) placed in the rear opening (19) and by the lower portion of two counter blades, the front counter blade being fixed to the chassis (1) and the rear counter blade being fixed to the magazine (2).

**3.** Device according to one of claims 1 or 2, characterized in that the blade-bearing saddle (17) is displaced by two jacks (60) having a horizontal axis and placed symmetrically between a wall (5) of the chassis (1) and the blade-bearing saddle (17).

**4.** Device according to claim 3, characterized in that the body of each of the jacks (60) is machined in the blade-bearing saddle (17) and in that the rod of each of said jacks (60) is attached to a wall (5) of the chassis (1) by a ball joint.

**5.** Device according to any one of claims 1 to 4, characterized in that the magazine (2) has a bottom portion (13) having a variable cross-section and a top, openable portion (43) having a constant rectangular cross-section.

**6.** Device according to claim 5, characterized in that the rear face (8) of the bottom portion (13) can adopt an oblique position, compressing the tubes placed in the magazine, through the action of a jack (61) pushing said rear face via a ball joint.

**7.** Device according to one of claims 5 or 6, characterized in that the lateral faces (41) of the bottom portion (13) of the magazine (2) can be displaced while remaining vertical through the action of a plurality of short-travel jacks (40).

**8.** Device according to any one of the preceding claims, characterized in that the movable flap (34) capable of closing the rear tube-cutting opening (19) is articulated about a horizontal axis (35) perpendicular to the travel of the saddle (17), and in that said flap (34) is supported on either side by an articulated arm beneath the flap and terminated by a roller (36) rolling or sliding on a ramp (37) fixed to the chassis (1).

**9.** Device according to claim 8, characterized in that the ramp is horizontal at its rear portion (37) and downwardly extending at its front portion (38), the change in direction being located so that, in the travel towards the front of the saddle (17), the flap (34) shuts the cutting opening (19) up to the end of the cutting operation, then swings so as to allow the cut tube pieces to fall towards a lower funnel (15).

**10.** Device according to any one of claim 1 to 9, characterized in that the blade-bearing saddle (17) bears a plurality of rollers (21) having a horizontal axis (22) rolling along horizontal rails (20) fixed to the chassis (1).

**11.** Device according to any one of claims 1 to 9, characterized in that the chassis (1) has, on its two lateral faces, a plurality of rollers (30) having a horizontal axis and horizontally aligned and in that the saddle (17) has, on each of its lateral faces, a horizontal rail (29), and in that said rails (29) rest on said rollers (30).

**Patentansprüche**

**1.** Vorrichtung zum Schneiden des mechanischen Aufbaus von Kernreaktorbrennelementkassetten, wobei der Aufbau mindestens ein unteres Endstück und Führungsrohre (3) aufweist, wobei der Aufbau senkrecht in einem Lager (2) angeordnet ist und das Schneiden durch die Bewegung einer Klinge (53) erfolgt, die auf einem Klingenträgerwagen (17) angeordnet ist, der sich in einem Gestell (1) geradlinig hin- und herbewegt,

**dadurch gekennzeichnet,**
daß der Klingenträgerwagen (17) in seinem oberen Teil zwei im wesentlichen rechteckige Kammern (18, 19) aufweist: eine vordere Kammer (18), die an ihrem unteren Teil geschlossen ist und dazu bestimmt ist, den unteren Teil der Führungsrohre aufzunehmen und zu schneiden, und eine hintere Kammer (19), die in ihrem unteren Teil offen ist und dazu bestimmt ist, die Rohre aufzunehmen und zu schneiden (3), wobei die hintere Kammer (19) zeitweise durch eine bewegliche Platte (34) verschließbar ist.

2. Vorrichtung nach Anspruch 1,
dadurch gekennzeichnet,
daß die Schnittebene horizontal ist und durch den oberen Teil der Klinge (53) bestimmt wird, die in der hinteren Kammer (19) angeordnet ist und durch den unteren Teil zweier Gegenklingen, wobei die vordere Gegenklinge am Gestell (1) und die hintere Gegenklinge am Lager (2) befestigt ist.

3. Vorrichtung nach einem der Ansprüche 1 oder 2,
dadurch gekennzeichnet,
daß der Klingenträgerwagen (17) durch zwei Spindeln mit horizontaler Achse bewegt wird, die zwischen einer Wandung (5) des Gehäuses (1) und dem Klingenträgerwagen (17) angeordnet sind.

4. Vorrichtung nach Anspruch 3,
dadurch gekennzeichnet,
daß der Körper einer jeden Spindel (16) in den Klingenträgerwagen (17) eingearbeitet ist und die Stange einer jeden Spindel (60) mit einer Gelenkkupplung an der Wand (5) des Gehäuses (1) befestigt ist.

5. Vorrichtung nach einem der Ansprüche 1 bis 4,
dadurch gekennzeichnet,
daß das Lager (2) einen unteren Teil (13) mit variablem Querschnitt und einen oberen offen Teil (43) mit konstantem rechtwinkligem Querschnitt aufweist.

6. Vorrichtung nach Anspruch 5,
dadurch gekennzeichnet,
daß die Hinterseite (8) des unteren Teils (13) eine schräge Stellung einnehmen kann, in der die Rohre, die in dem Lager angeordnet sind, komprimiert werden, durch die Einwirkung einer Spindel, die die hintere Seite über ein Kniegelenk verschiebt.

7. Vorrichtung nach einem der Ansprüche 5 oder 6,
dadurch gekennzeichnet,
daß sich die Seitenflächen (41) des unteren Teils (13) des Lagers (2) durch die Betätigung einer Mehrzahl von Spindeln um eine geringe Strecke bewegen können, wobei sie vertikal ausgerichtet bleiben.

8. Vorrichtung nach einem der vorstehenden Ansprüche,
dadurch gekennzeichnet,
daß die bewegliche Platte (34), die die hintere Kammer (19) zum Schneiden von Rohren abdecken kann, um eine Horizontalachse (35) drehbar angelenkt ist, die senkrecht zur Bewegungsrichtung des Wagens (17) verläuft, daß die Platte (34) auf jeder Seite durch einen unter der Platte angelenkten Arm gehalten wird und wobei die Platte mit einer Laufrolle (36) endet die auf einer auf dem Chassis (1) befestigten Rampe (37) rollt oder gleitet.

9. Vorrichtung nach Anspruch 8,
dadurch gekennzeichnet,
daß die Rampe an ihrem hinteren Teil (37) horizontal und an ihrem vorderen Teil (38) abfallend verläuft, wobei die Richtungsänderung so angeordnet ist, daß die Platte (34) auf dem Wege zum vorderen Teil des Wagens (17) die Schneidkammer (19) bis zur Beendigung eines Schneidvorgangs abschließt und anschließend kippt, um die abgeschnittenen Rohrteile in eine darunter angeordnete Tonne (15) fallenzulassen.

10. Vorrichtung nach einem der Ansprüche 1 bis 9,
dadurch gekennzeichnet,
daß der Klingenträgerwagen (17) mehrere Rollen (21) mit horizontaler Achse (22) aufweist, die auf horizontalen auf dem Chassis (1) befestigten Schienen (20) rollen.

11. Vorrichtung nach einem der Ansprüche 1 bis 9,
dadurch gekennzeichnet,
daß das Chassis (1) auf seinen beiden Seitenflächen mehrere Rollen (30) mit horizontaler Achse aufweist, die horizontal ausgerichtet sind und dadurch, daß der Wagen (17) auf jeder seiner Seitenflächen eine horizontale Schiene (29) aufweist und dadurch, daß die Schienen (29) auf den Rollen (30) angeordnet sind.

FIG.1

FIG.2

FIG.3

FIG.4

FIG.5

FIG.6

9

FIG.7